# EUROPEAN PATENT APPLICATION

(11) **EP 4 714 694 A1**
(43) Date of publication of application: **25.03.2026**
(21) Application number: 25203407.9
(22) Date of filing: 19.09.2025
(51) Int. Cl.: B60H 1/00

(54) **THERMAL REUSE SYSTEM AND VEHICLES INCORPORATING THE SAME**

(30) Priority: 20.09.2024 US 202463697066 P; 25.03.2025 US 202563777065 P
(71) Applicant: Thor Tech, Inc., Elkhart, IN 46514 (US)
(72) Inventor: KANE, James, Elkhart, 46514 (US); FELLER, Dustin, Elkhart, 46514 (US); PARR, Thomas, Elkhart, 46514 (US)
(74) Representative: Müller Schupfner & Partner Patent- und Rechtsanwaltspartnerschaft mbB (Muc)

(57) **Abstract**

A thermal reuse system comprising a compressor (304) operable to increase a pressure of a working fluid, an external coil (306) operable to absorb or radiate heat between the working fluid and an environment according to an operational mode, a thermal expansion valve (308) operable to decrease a temperature of the working fluid according to the operational mode, a conditioned space coil (302, 306) operable to cool or heat a conditioned space according to the operational mode; and a cabin thermal system comprising a living space coil (118) operable to cool or warm a working fluid according to the operational mode, a living space thermal expansion valve (126) operable to increase or decrease a temperature of the working fluid according to the operational mode wherein:
in a conditioned space heating or cooling operational mode, the working fluid flows between the compressor (304), the external coil (306), the thermal expansion valve (308), and the conditioned space coil (302, 306); and
in a living space heating or cooling operational mode, the working fluid flows between the compressor (304), the external coil (306), the living space thermal expansion valve (126), and the living space coil (118).

## Description

### CROSS-REFERENCE TO RELATED APPLICATIONS

This application claims priority to U.S. Provisional Patent Application Number 63/697,066 filed on September 20, 2024 and entitled "Thermal Reuse System," and U.S. Provisional Patent Application Number 63,777,065 filed on March 25, 2025 and entitled "Thermal Reuse System."

### BACKGROUND

Recreational vehicles (RVs) may include an RV body that encloses a cockpit area and living space. The RV may include a cabin thermal system (e.g., air conditioning (AC)) and heating system to adjust an interior temperature of the RV, such as the cockpit area and living space. Electric RVs may further include an electric drivetrain to propel wheels of the RV, such as through the use of electric motors. The RV may further include a battery and battery thermal system to cool the battery and maintain the battery within a threshold temperature or a drivetrain thermal system to maintain the electric drivetrain with a threshold temperature.

The cooling systems are generally independent from one another: the cabin thermal system is used to cool only the interior of the RV, while the battery thermal system and drivetrain thermal system are utilized to cool only the battery and drivetrain of the RV, respectively. The battery thermal system and drivetrain thermal system's cooling components may be unused when the battery and/or drivetrain is within the threshold temperature. As such, the battery thermal system and drivetrain thermal system's cooling potential may be left unused when the battery and drivetrain are within the threshold temperature.

Accordingly, alternative heating and cooling systems may be desired.

### SUMMARY

In one embodiment, a thermal reuse system includes a compressor operable to increase a pressure of a working fluid, an external coil operable to absorb or radiate heat between the working fluid and an environment according to an operational mode, a thermal expansion valve operable to decrease a temperature of the working fluid according to the operational mode, a conditioned space coil operable to cool or heat a conditioned space according to the operational mode, and a cabin thermal system. The cabin thermal system includes a living space coil operable to cool or warm a working fluid according to the operational mode, and a living space thermal expansion valve operable to increase or decrease a temperature of the working fluid according to the operational mode. In a conditioned space heating or cooling operational mode, the working fluid flows between the compressor, the external coil, the thermal expansion valve, and the conditioned space coil. In a living space heating or cooling operational mode, the working fluid flows between the compressor, the external coil, the living space thermal expansion valve, and the living space coil.

In another embodiment, a vehicle includes a compressor operable to increase a pressure of a working fluid, an external coil operable to absorb or radiate heat between the working fluid and an environment according to an operational mode, a thermal expansion valve operable to decrease a temperature of the working fluid according to the operational mode, a conditioned space coil operable to cool or heat a conditioned space according to the operational mode, and a cabin thermal system. The cabin thermal system includes a living space coil operable to cool or warm a working fluid according to the operational mode, and a living space thermal expansion valve operable to increase or decrease a temperature of the working fluid according to the operational mode. In a conditioned space heating or cooling operational mode, the working fluid flows between the compressor, the external coil, the thermal expansion valve, and the conditioned space coil. In a living space heating or cooling operational mode, the working fluid flows between the compressor, the external coil, the living space thermal expansion valve, and the living space coil.

### BRIEF DESCRIPTION OF THE VIEWS OF THE DRAWINGS

The following detailed description of specific embodiments of the present disclosure can be best understood when read in conjunction with the following drawings, where like structure is indicated with like reference numerals and in which:
FIG. 1 is a side view of an RV with an RV body, according to one or more embodiments described and illustrated herein.
FIG. 2 is a block diagram of a thermal reuse system, according to one or more embodiments described and illustrated herein.
FIG. 3 is a block diagram of a thermal reuse system operating in conditioned space and living space cooling operational modes according to one or more embodiments described and illustrated herein.
FIG. 4 is a block diagram of a thermal reuse system operating in conditioned space and living space heating operational modes according to one or more embodiments described and illustrated herein.
FIG. 5 is a block diagram of a thermal reuse system having a resistance heater according to one or more embodiments described and illustrated herein.

### DETAILED DESCRIPTION

The present disclosure is directed to a thermal reuse system of an RV that repurposes the battery thermal system to cool the RV living space (e.g., the RV cockpit area and living space). The present disclosure may also repurpose the drivetrain thermal system to cool the RV living space. Embodiments of the thermal reuse system may include evaporators and condensers fluidly coupled to the battery thermal system, drivetrain thermal system, and cabin thermal system of the RV. Embodiments of the present disclosure repurpose the battery thermal system and drivetrain thermal system to provide cooling/heating air to the cabin thermal system, supplementing the cooling/heating capacity of the cabin thermal system. The thermal reuse system may supplement the cabin thermal system when the battery thermal system or drivetrain thermal systems are not in use. Alternatively, the thermal reuse system may supplement the cabin thermal system when the full capacity of the battery thermal system or drivetrain thermal system are not used for cooling the battery or drivetrain of the RV, respectively. The battery thermal system or drivetrain thermal system may also replace the cabin thermal system.

The present disclosure also relates to RVs. RVs encompassed by the present disclosure include motorized recreational vehicles, like motor homes and other vehicles with their own motor and drivetrain, and include trailer-type recreational vehicles, which include fifth wheel trailers and other types of towable campers, toy haulers, etc. It is noted that while the present disclosure specifically references RVs, the present disclosure may also be applied to the cooling systems of any vehicle with a battery thermal system or drivetrain thermal system.

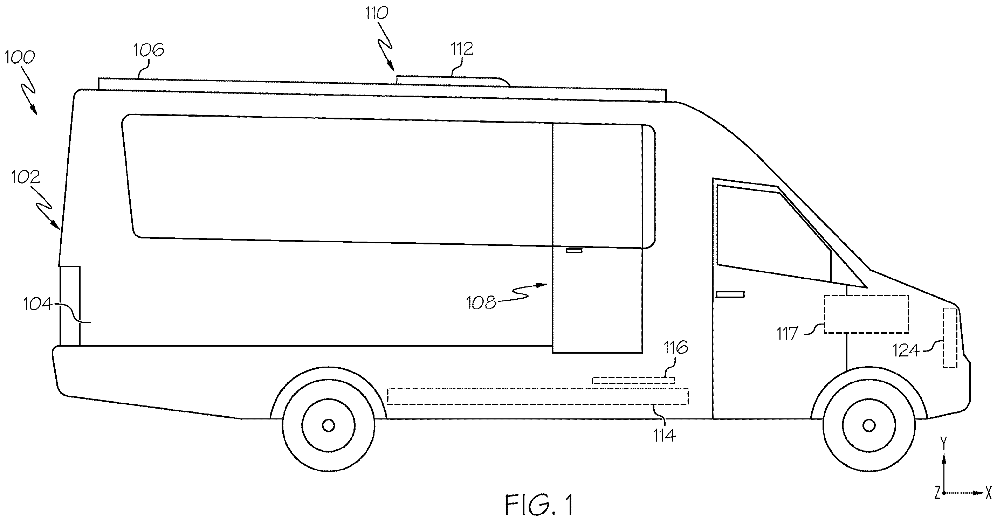

FIG. 1 depicts an RV 100 with an RV body 102. The RV body 102 includes RV sidewalls 104 and an RV roof 106. The RV body 102 encloses an RV living space 108 where passengers reside. The living space 108 may further include a cockpit area (not depicted) in which the steering controls are housed. The RV 100 further includes a cabin thermal system 110. The cabin thermal system 110 may include an AC 112 and/or heater that cools and/or heats the RV living space 108. The RV 100 further includes a battery 114 and a battery thermal system 116 that is used to cool and/or heat the battery 114. The battery thermal system 116 includes piping or tubing having coils proximate the battery 114. A refrigerant, such as R-22, R-410A and the like, is used as a working fluid to either provide heat or remove heat from the battery 114. In embodiments, the RV 100 may further include a drivetrain 117 (such as one or more electric motors or an internal combustion engine) to rotate wheels of the RV 100 to propel the RV 100. In such embodiments, the RV 100 may further include a drivetrain thermal system 124 to cool and/or heat the components of the RV drivetrain. Similarly, a working fluid is provided through piping or tubing to heat or cool the RV drivetrain.

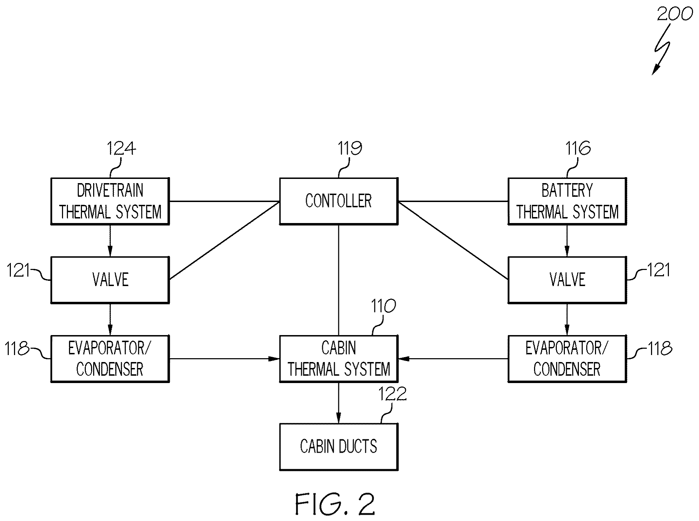

The cabin thermal system 110 may include an evaporator and condenser to cool and heat air, respectively. The cabin thermal system 110 may be fluidly coupled to cabin ducts 122 (as depicted in FIG. 2), which may route the cooled/heated air into the living space 108 of the RV 100. On a particularly hot or cold day, the cabin thermal system 110 may continuously operate to maintain the living space 108 of the RV 100 above or below a threshold temperature. As such, the cabin thermal system 110 may not have adequate cooling/heating capacity to maintain the living space 108 of the RV 100 within the desired threshold temperature range. Moreover, continuous operation of the cabin thermal system 110 may strain the cabin thermal system 110, resulting in a decreased life of parts within the cabin thermal system 110. As such, embodiments of the present disclosure are directed to a thermal reuse system 200 that utilizes the battery thermal system 116 or the drivetrain thermal system 124 to supplement or replace the cooling/heating capacity of the cabin thermal system 110.

Referring now to FIG. 2, a block diagram of a thermal reuse system 200 is depicted. The thermal reuse system 200 of FIG. 2 depicts the repurposing of the battery thermal system 116 and the drivetrain thermal system 124. The thermal reuse system 200 includes valves 121 that fluidly couple the cabin thermal system 110 to the battery thermal system 116 and drivetrain thermal system 124. It is noted that although one valve 121 is depicted as being coupled to each of the battery thermal system 116 and drivetrain thermal system 124, there may be any number of valves 121 coupled to each of the battery thermal system 116 and drivetrain thermal system 124, such as one valve 121 to an evaporator/condenser 118. It is noted that the evaporator/condenser 118 may be referred to as a living space coil 118 that is operable to cool or heat the cabin depending on if the system 200 is operating in a heating or cooling mode.

It is further noted that each of the cabin thermal system 110, battery thermal system 116, and the drivetrain thermal system 124 may each include evaporators and condensers within the respective systems. As such, the additional evaporator/condenser 118 may be in addition to the evaporator/condensers that are already within each of the aforementioned systems. Although FIG. 1 illustrates an evaporator/condenser 118 for each of the battery thermal system 116 and the drivetrain thermal system 124, it should be understood that in some embodiments a single evaporator/condenser 118 is shared between battery thermal system 116 and the drivetrain thermal system 124. For example valve 121 and evaporator/condenser 118 may be single component or multiple components (i.e., a single valve 121 or multiple valves 121 and/or a single evaporator/condenser 118 or multiple evaporator/condensers 118).

The thermal reuse system 200 may further include a controller 119. The controller 119 may open and close the valve(s) 121 to utilize the battery thermal system 116 or the drivetrain thermal system 124 to supplement the heating or cooling capacity of the cabin thermal system 110. The controller 119 may also receive inputs from the cabin thermal system 110, the battery thermal system 116, or the drivetrain thermal system 124. When the controller recognizes that the battery thermal system 116 or the drivetrain thermal system 124 are not being used or are not being used at their full capacity, the controller may open the valves 121 to supplement the heating/cooling capacity of the cabin thermal system 110.

Still referring to FIG. 2, the thermal reuse system 200 includes living space coils 118 that are fluidly coupled to the battery thermal system 116 and the drivetrain thermal system 124 and are utilized to repurpose the battery thermal system 116 to supplement the cooling/heating of the cabin thermal system 110. Specifically, the battery thermal system 116 may utilize the living space coil 118 as an evaporator cool the living space 108 and as a condenser to heat the living space as a heat pump. Air passing over a working fluid within the living space coil 118 becomes heated or cooled and then routed to the living space 108 of the RV 100 through the cabin thermal system 110 (e.g., through cabin ducts 122 of the cabin thermal system 110). Although the battery thermal system 116 is depicted as routing air through the cabin ducts 122 of the cabin thermal system 110, it should be understood that the battery thermal system 116 may include ducts independent of those of the cabin thermal system 110 to route air to the living space 108 of the RV 100.

The drivetrain thermal system 124 may be similarly repurposed. Specifically, the one or more living space coils 118 fluidly coupled to the drivetrain thermal system 124 are utilized to repurpose the drivetrain thermal system 124 to supplement the cooling/heating of the cabin thermal system 110. Specifically, the drivetrain thermal system 124 may utilize the living space coil 118 as an evaporator to cool and as a condenser to heat air that is routed to the living space 108 of the RV 100 through the cabin thermal system 110 (e.g., through cabin ducts 122 of the cabin thermal system 110). Although the drivetrain thermal system 124 is depicted as routing air through the cabin ducts 122 of the cabin thermal system 110, it should be understood that the drivetrain thermal system 124 may include ducts independent of those of the cabin thermal system 110 to route air to the living space 108 of the RV 100.

In embodiments, the battery thermal system 116 and the drivetrain thermal system 124 may not only supplement the cabin thermal system 110, but either of the battery thermal system 116 and/or the drivetrain thermal system 124 may replace the cabin thermal system 110. As such, the RV 100 may not require a cabin thermal system 110, as the battery thermal system 116 and/or the drivetrain thermal system 124 may route heated/cooled air to the living space 108 of the RV 100. Moreover, either of the battery thermal system 116 or the drivetrain thermal system 124 may supplement or replace one another.

The battery thermal system 116 and drivetrain thermal system 124 may withdraw air from the exterior of the RV 100 to cool or heat the exterior air. In other embodiments, the battery thermal system 116 and drivetrain thermal system 124 may draw air from the living space 108 of the RV 100 to cool or heat the air. The thermal reuse system 200 may be used when the RV 100 is parked or when the RV 100 is driving to a destination.

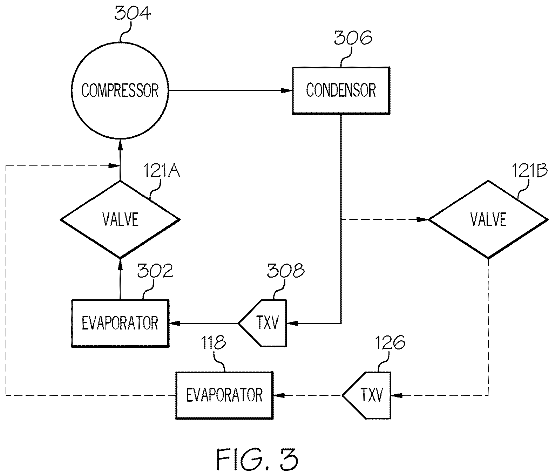

Now referring to FIG. 3, a block diagram of components of the example thermal reuse system 200 of FIG. 2 operating in a cooling mode is depicted. The thermal reuse system 200 includes a conditioned space coil 302 (labeled "evaporator"), a compressor 304, an external coil 306 (labeled "condenser"), and a thermal expansion valve 308, which may be components of the drivetrain thermal system 124 or the battery thermal system 116. Thus, the conditioned space coil 302, the compressor 304, the external coil 306, and the thermal expansion valve 308 are dedicated components of the drivetrain thermal system 124 or the battery thermal system 116. Thus, in this context the battery 114 is the conditioned space. When used in the drivetrain thermal system 124, the conditioned space coil 306 is operable to control the temperature (i.e., heat or cool) the drivetrain, such as the engine or electric motor. Thus, in this context the engine or electric motor is the conditioned space. When used in the battery thermal system 116, the conditioned space coil 302 is operable to control the temperature (i.e., heat or cool) the battery pack of the RV. As stated above, the conditioned space coil 302 when used to control the temperature of the battery 114 may be configured as a coil proximate the battery 114.

The example thermal reuse system 200 is operable to repurpose a working fluid of the drivetrain thermal system 124 and/or the battery thermal system 116 when the RV is not moving and it is desirable to condition the living space 108 of the RV by way of the RV cabin thermal system 110. The example thermal reuse system 200 includes a living space coil 118, a living space thermal expansion valve 126, a first valve 121A, and a second valve 121B. Although not depicted, it should be understood that the controller 119 may be coupled to the thermal reuse system 200 of FIG. 3.

During a drivetrain or battery cooling operational mode, the first valve 121A is opened and the second valve 121B is closed. It is noted that a pump is not shown in FIG. 3; however, a pump may be provide to cycle a working fluid (e.g., a refrigerant) through the closed-loop system. The working fluid is compressed by the compressor 304 and heated up due to increased pressure. The hot working fluid flows through the external coil 306, which acts as a condenser in cooling mode, to transfer heat from the working fluid to the environment. Air is forced through the external coil 306, either by movement of the vehicle (e.g., a vehicle radiator) and/or by a fan. The external coil 306 may be shared between the drivetrain thermal system 124 and the battery thermal system 116. In other embodiments, each of the drivetrain thermal system 124 and the battery thermal system 116 has an independent external coil 306. The external coil 306 may be configurated as a radiator, for example. The cooled working fluid then flows through the expansion valve 308, which expands the working fluid by reducing its pressure, thereby chilling the working fluid. The working fluid then passes through the conditioned space coil 302, which receives heat from the drivetrain or the battery and acts as an evaporator. The conditioned space coil 302 may be configured as tubing wrapped around and/or proximate components of the drivetrain or battery, for example. The drivetrain or the battery is cooled by the transfer of heat from the drivetrain or the battery to the chilled working fluid in the conditioned space coil 302. The working fluid then travels from the conditioned space coil 302 through the first valve 121A where it is then once again heated by the compressor 304.

During a living space cooling mode, the first valve 121A is closed and the second valve 121B is opened, and the working fluid flows as indicated by the dashed lines. The working fluid of the drivetrain thermal system 124 or the battery thermal system 116 is compressed by the compressor 304 and heated up due to increased pressure. The hot working fluid flows throw the external coil 306 to transfer heat from the working fluid to the environment. The working fluid then flows through the opened second valve 121B and into the living space thermal expansion valve 126, which chills the working fluid. The working fluid does not flow through the expansion valve 308 and the evaporator 302 because the first valve 121A is closed. The chilled working fluid passes through the living space coil 118, which is a coil acts as an evaporator in cooling mode. Air is forced through the cold living space coil 118 by one or more fans, which passes through ducts 122 and into the living space 108 of the RV 100. In this manner, the working fluid of the drivetrain thermal system 124 or the battery thermal system 116 can be rerouted to cool the living space 108 on demand.

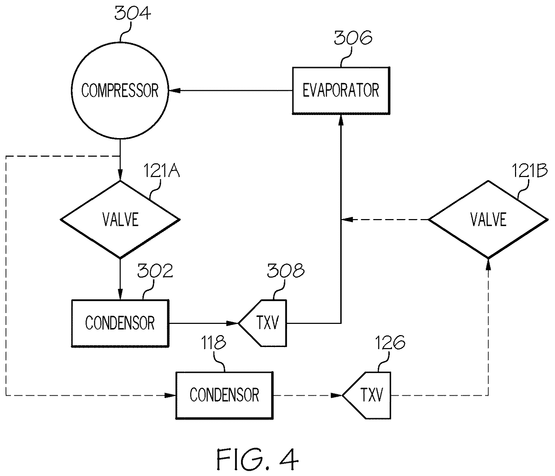

Now referring to FIG. 4, components of the thermal reuse system 200 operating in a heating mode is illustrated. In heating mode, the thermal reuse system 200 operate in reverse from the cooling mode.

During a drivetrain or battery heating operational mode, the first valve 121A is opened and the second valve 121B is closed. The working fluid is compressed by the compressor 304 and heated up due to increased pressure. The hot working fluid flows through the first valve 121A and then into the conditioned space coil 302, which acts as a condenser during heating mode. Heat is transferred from the hot working fluid to the drivetrain or the battery by way of the conditioned space coil. In this manner, the drivetrain or the battery can be warmed, such as during the cold winter months. The working fluid then flows through the thermal expansion valve 308, which reduces the pressure and temperature of the working fluid. The chilled working fluid flows through the exterior coil 306, which operates as an evaporator in the heating mode. Because the temperature of the working fluid is less than the ambient temperature, the working fluid absorbs heat from the environment. Air may be forced through the exterior coil 302 by movement of the RV 100 and/or by a fan. The warmed working fluid then is heated and compressed once again by the compressor.

During a living space heating mode, the first valve 121A is closed and the second valve 121B is opened, and the working fluid flows as indicated by the dashed lines. Hot working fluid compressed by the compressor 304 bypasses the conditioned space coil 302 due to the first valve 121A being closed. Rather, the hot working fluid flows through the living space coil 118 (which acts as a condenser during heating mode) to heat the living space 108 of the RV. Air may be forced through the living space coil 118 and enter the living space 108 through ducts 122. Heat from the hot working fluid is transferred to the forced air flowing through the ducts 122. The working fluid then flows through the living thermal expansion valve 126, which reduces the pressure and temperature of the working fluid. The chilled working fluid flows through the opened second valve 121B and into the exterior coil 306. Because the temperature of the working fluid is lower than the ambient temperature, the working fluid absorbs heat from the environment. The warmed working fluid is then compressed by the compressor 304 so that its temperature is increased. In this manner, the working fluid of the drivetrain thermal system 124 or the battery thermal system 116 can be rerouted to heat the living space 108 on demand.

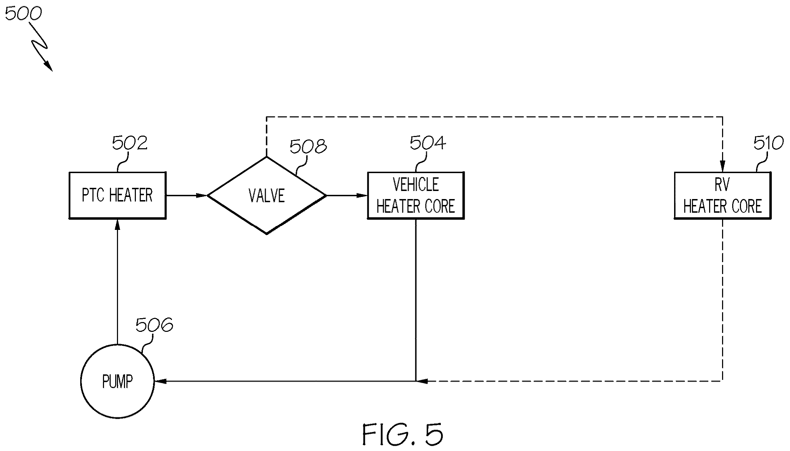

In some cases, the RV 100 may include a resistance heater, such as a positive temperature coefficient heater (PTC heater) to heat vehicle components. Referring now to FIG. 5, an example electric heating system 500 that can be used to heat vehicle components 504 or living space RV components (RV heater core 510) is illustrated. The RV 100, which may include an electric or internal combustion drivetrain, may include a PTC heater 502 (or other electric resistive heater) that increases the temperature of a working fluid by resistive heating. A current is passed through resistors to increase the temperature of the working fluid flowing by the resistors. A two-way valve 508 can pass the hot working fluid to either vehicle components (vehicle heater core 504) or RV components (RV heater core 510). When the RV 100 is traveling, the valve 508 is opened to let hot working fluid flow through vehicle components, such as a battery pack and/or electric motor, so that these components may operate at a desired temperature, particularly during the cold winter months. However, when the RV 100 is parked at a campground or other camping location, the valve 508 may be operated to route the working fluid heated by the vehicle PTC heater 502 to warm the living space 108 of the RV 100. The working fluid flows in a continuous path by use of a pump 506.

What has been described above includes examples of the present specification. It is, of course, not possible to describe every conceivable combination of components or methodologies for purposes of describing the present specification, but one of ordinary skill in the art may recognize that many further combinations and permutations of the present specification are possible. Each of the components described above may be combined or added together in any permutation to define embodiments disclosed herein. Accordingly, the present specification is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A thermal reuse system comprising:
a compressor operable to increase a pressure of a working fluid;
an external coil operable to absorb or radiate heat between the working fluid and an environment according to an operational mode;
a thermal expansion valve operable to decrease a temperature of the working fluid according to the operational mode;
a conditioned space coil operable to cool or heat a conditioned space according to the operational mode; and
a cabin thermal system comprising:
a living space coil operable to cool or warm a working fluid according to the operational mode;
a living space thermal expansion valve operable to increase or decrease a temperature of the working fluid according to the operational mode,
wherein:
in a conditioned space heating or cooling operational mode, the working fluid flows between the compressor, the external coil, the thermal expansion valve, and the conditioned space coil; and
in a living space heating or cooling operational mode, the working fluid flows between the compressor, the external coil, the living space thermal expansion valve, and the living space coil.

2. The thermal reuse system of claim 1, further comprising a battery, wherein the conditioned space coil is located proximate the battery to heat or cool the battery according to the operational mode.

3. The thermal reuse system of claim 1 or 2, further comprising a drivetrain, wherein the conditioned space coil is located proximate the drivetrain to heat or cool the drivetrain according to the operational mode.

4. The thermal reuse system of any one of the preceding claims, further comprising a battery and a drivetrain, wherein the conditioned space is loved proximate the drivetrain and the battery.

5. The thermal reuse system of any one of the preceding claims, further comprising a first valve and a second valve, wherein:
the first valve is fluidly coupled between the compressor and the conditioned space coil; and
the second valve is fluidly coupled between the external coil and the living space thermal expansion valve.

6. The thermal reuse system of claim 5, wherein the second valve is fluidly coupled to the external coil and the thermal expansion valve at a first port and the living space thermal expansion valve at a second port.

7. The thermal reuse system of claim 5 or 6, wherein:
in the conditioned space heating or cooling operational mode, the first valve is opened and the second valve is closed; and
in the living space heating or cooling operational mode, the first valve is closed and the second valve is opened.

8. The thermal reuse system of any one of the preceding claims, wherein the living space coil is fluidly coupled to the compressor.

9. The thermal reuse system of any one of the preceding claims, wherein:
in a conditioned space cooling operational mode, the pressure and the temperature of the working fluid is increased by the compressor, the working fluid is then cooled by the external coil, the pressure and the temperature of the working fluid is then reduced by the thermal expansion valve, and then heat is absorbed from the conditioned space by the working fluid within the conditioned space coil; and
in a living space cooling operational mode, the pressure and the temperature of the working fluid is increased by the compressor, the working fluid is then cooled by the external coil, the pressure and the temperature of the working fluid is then reduced by the living space thermal expansion valve, and then heat is absorbed from a living space by the working fluid within the living space coil.

10. The thermal reuse system of any one of the preceding claims, wherein:
in a conditioned space heating operational mode, the pressure and the temperature of the working fluid is increased by the compressor, the working fluid is then cooled by the conditioned space coil, the pressure and the temperature of the working fluid is then reduced by the thermal expansion valve, and then heat is absorbed from the environment by the working fluid within the external coil; and
in a living space heating operational mode, the pressure and the temperature of the working fluid is increased by the compressor, the working fluid is then cooled by the living space coil, the pressure and the temperature of the working fluid is then reduced by the living space thermal expansion valve, and then heat is absorbed from the environment by the working fluid within the external coil.

11. A vehicle comprising:
a compressor operable to increase a pressure of a working fluid;
an external coil operable to absorb or radiate heat between the working fluid and an environment according to an operational mode;
a thermal expansion valve operable to decrease a temperature of the working fluid according to the operational mode;
a conditioned space coil operable to cool or heat a conditioned space according to the operational mode; and
a cabin thermal system comprising:
a living space coil operable to cool or warm a working fluid according to the operational mode to cool or warm the living space;
a living space thermal expansion valve operable to increase or decrease a temperature of the working fluid according to the operational mode,
wherein:
in a conditioned space heating or cooling mode, the working fluid flows between the compressor, the external coil, the thermal expansion valve, and the conditioned space coil; and
in a living space heating or cooling mode, the working fluid flows between the compressor, the external coil, the living space thermal expansion valve, and the living space coil.

12. The vehicle of claim 11, further comprising a battery, wherein the conditioned space coil is located proximate the battery to heat or cool the battery according to the operational mode.

13. The vehicle of claim 11 or 12, further comprising a drivetrain, wherein the conditioned space coil is located proximate the drivetrain to heat or cool the drivetrain according to the operational mode.

14. The vehicle of any one of claims 11 to 13, further comprising a battery and a drivetrain, wherein the conditioned space is loved proximate the drivetrain and the battery.

15. The vehicle of any one of claims 11 to 14, further comprising a first valve and a second valve, wherein:
the first valve is fluidly coupled between the compressor and the conditioned space coil; and
the second valve is fluidly coupled between the external coil and the living space thermal expansion valve.

16. The vehicle of claim 15, wherein the second valve is fluidly coupled to the external coil and the thermal expansion valve at a first port and the living space thermal expansion valve at a second port.

17. The vehicle of claim 15 or 16, wherein:
in a conditioned space cooling or heating operational mode, the first valve is opened and the second valve is closed; and
in living space cooling or heating operational mode, the first valve is closed and the second valve is opened.

18. The vehicle of any one of claims 11 to 17, wherein the living space coil is fluidly coupled to the compressor.

19. The vehicle of any one of claims 11 to 18, wherein:
in a conditioned space cooling operational mode, the pressure and the temperature of the working fluid is increased by the compressor, the working fluid is then cooled by the external coil, the pressure and the temperature of the working fluid is then reduced by the thermal expansion valve, and then heat is absorbed from the conditioned space by the working fluid within the conditioned space coil; and
in a living space cooling operational mode, the pressure and the temperature of the working fluid is increased by the compressor, the working fluid is then cooled by the external coil, the pressure and the temperature of the working fluid is then reduced by the living space thermal expansion valve, and then heat is absorbed from the living space by the working fluid within the living space coil.

20. The vehicle of any one of claims 11 to 19, wherein:
in a conditioned space heating operational mode, the pressure and the temperature of the working fluid is increased by the compressor, the working fluid is then cooled by the conditioned space coil, the pressure and the temperature of the working fluid is then reduced by the thermal expansion valve, and then heat is absorbed from the environment by the working fluid within the external coil; and
in a living space heating operational mode, the pressure and the temperature of the working fluid is increased by the compressor, the working fluid is then cooled by the living space coil, the pressure and the temperature of the working fluid is then reduced by the living space thermal expansion valve, and then heat is absorbed from the environment by the working fluid within the external.
